# FASCICULE DE BREVET EUROPEEN

(11) **EP 1 349 248 B1**
(45) Date de publication et mention de la délivrance du brevet: **15.08.2012**
(21) Numéro de dépôt: 03290778.4
(22) Date de dépôt: 27.03.2003
(51) Int. Cl.: H02G 3/04, B29C 47/12

(54) **Procédé et dispositif de fabrication par extrusion d'un profilé**
Verfahren und Vorrichtung zur Herstellung eines Profiles durch Extrusion
Process and apparatus for manufacturing a profile by extrusion

(30) Priorité: 28.03.2002 FR 0203963
(43) Date de publication de la demande: 01.10.2003
(73) Titulaire: PLANET-WATTOHM, 60300 Senlis (FR)
(72) Inventeur: Bouley, Olivier, 60580 Coye La Foret (FR); Carreno, Dominique, 60600 Clermont (FR); Scuttenaire, Alain, 60320 Bethisy Saint Martin (FR); Marcou, Jean-Claude, 87000 Limoges (FR)
(74) Mandataire: Santarelli

(56) Documents cités:
- EP-A- 1 160 949
- FR-A- 2 541 176
- US-A- 3 346 918
- US-A- 4 019 414
- US-A- 4 187 068
- US-A- 6 119 324

## Description

La présente invention concerne un procédé et un dispositif de fabrication par extrusion d'un profilé.

L'invention trouve une application particulièrement avantageuse dans la fabrication de socles de goulotte du type de ceux mis en oeuvre par exemple pour le support, le logement et la protection de divers appareillages, et en particulier de divers appareillages électriques, aussi bien que pour le support, le logement et la protection des conducteurs, câbles ou canalisations nécessaires à la desserte de ces appareillages.

De manière usuelle, un tel procédé de fabrication comprend les étapes consistant à :
- alimenter une extrudeuse avec une matière se présentant sous la forme d'une poudre ou de granulats ;
- chauffer cette matière pour la rendre pâteuse ;
- pousser cette matière pâteuse au travers d'une filière dont la section de sortie correspond globalement à la section dudit profilé ; et
- refroidir le profilé obtenu à la sortie de la filière.

En fonction du type de matière utilisée, on obtient, à l'aide du procédé précité, un profilé qui peut être rigide ou souple.

On connaît également un procédé d'extrusion qui permet d'extruder côte à côte un profilé souple et un profilé rigide et de les faire se rejoindre sur une arête ou bande commune alors que leurs températures sont encore suffisamment élevées pour permettre aux deux matières de se souder.

Un tel procédé est habituellement utilisé pour réaliser des profilés rigides munis de joints souples.

Toutefois, l'inconvénient principal des procédés d'extrusion précités déjà connus est qu'ils permettent d'obtenir seulement un profilé dont la section transversale est identique sur toute sa longueur.

Enfin, on connaît du document US 6 119 324, selon le préambule de la revendication 1 un procédé de fabrication par extrusion d'un profilé comprenant une opération consistant à pousser une matière pâteuse au travers d'une filière dont la section de sortie correspond globalement à la section dudit profilé. En outre, selon ce procédé, il est prévu de découper de façon continue ou discontinue le profilé sorti de la filière. Pour ce faire, un couteau est disposé en aval de la sortie de la filière.

Un tel procédé est complexe et nécessite d'accorder la vitesse de déplacement du couteau à celle du profilé sortant de la filière.

La présente invention propose un nouveau procédé de fabrication qui permet de remédier aux inconvénients précités.

Plus particulièrement, l'invention propose selon la revendication 1 un procédé de fabrication par extrusion d'un profilé creux comportant une ouverture longitudinale, ce procédé comprenant une opération consistant à pousser une matière pâteuse au travers d'une filière dont la section de sortie correspond globalement à la section dudit profilé, caractérisé en ce que, durant l'opération de poussée, on fait varier une partie de ladite section de sortie de manière à moduler le trajet d'au moins un bord libre longitudinal dudit profilé selon un trajet non rectiligne et en ce que, pour faire varier cette partie de la section de sortie de la filière, on obture partiellement cette partie à l'aide d'un obturateur dont on positionne l'extrémité devant cette partie et que l'on déplace à translation, parallèlement à la largeur de cette extrémité, le long de ladite partie entre un premier point et un deuxième point espacés l'un de l'autre.

En fait, on connaît déjà, de par les documents US-3,346,918 ou US-4,187,068, des filières d'extrusion pour des articles présentant une ou plusieurs saillies radiales s'étendant tout au long de ces articles, avec des variations de la dimension radiale de ces saillies. Pour ce faire, ces filières comportent des pistons se déplaçant radialement, en ayant des extrémités qui délimitent les bords extérieurs des saillies. Puisque ces extrémités sont dans le prolongement des pistons, il en découle que ces extrémités se déplacent parallèlement à leur longueur, ce qui implique un encombrement significatif.

Selon une variante préférentielle du procédé conforme à l'invention, on fait varier deux parties différentes de ladite section de sortie de manière à moduler le trajet de deux bords libres longitudinaux du profilé selon un trajet non rectiligne.

Selon une caractéristique particulièrement avantageuse du procédé conforme à l'invention, on fait varier en continu chaque partie de la section de sortie de la filière.

Ainsi, on peut obtenir par exemple un profilé dont le bord libre suit une trajectoire sinusoïdale.

Selon une variante du procédé conforme à l'invention, on fait varier de manière séquentielle chaque partie de la section de sortie de la filière.

De cette manière, on peut obtenir par exemple un profilé dont le bord libre suit un trajet en créneaux.

On peut positionner l'obturateur devant ladite partie de la section de la filière.

On peut également faire pénétrer l'obturateur partiellement à l'intérieur de ladite partie de la section de sortie de la filière.

La première solution précitée consistant à positionner l'obturateur devant chaque partie de la section de sortie de la filière, permet de réaliser facilement sans coupe ni déchet un profilé avec un seul bord libre modulé.

Selon un mode de réalisation du procédé conforme à l'invention, lors de l'opération de poussée, on forme, au travers de ladite partie de la section de sortie de la filière, un retour d'une aile latérale ou d'une cloison de séparation dudit profilé, et, durant cette opération de poussée, en faisant varier ladite partie de la section de sortie, on module le trajet du bord libre dudit retour selon un trajet non rectiligne.

Selon un autre mode de réalisation avantageux du procédé conforme à l'invention, lors de l'opération de poussée, on forme, au travers de la partie de la section de sortie de la filière, deux retours dirigés l'un vers l'autre de deux ailes latérales longitudinales dudit profilé, et, durant cette opération de poussée, en faisant varier ladite partie de la section de sortie correspondant à la formation des retours, on module simultanément les trajets des bords libres desdits retours selon des trajets non rectilignes.

Selon le mode de réalisation précité, on peut moduler les trajets des bords libres desdits retours selon des trajets non rectilignes identiques ou différents.

Selon le mode de réalisation précité du procédé conforme à l'invention, on peut éliminer par découpage un des deux retours du profilé obtenu par extrusion pour former un profilé à un seul retour à bord libre non rectiligne.

Dans ce cas, le retour découpé est recyclé.

Selon une caractéristique avantageuse du procédé conforme à l'invention, on alimente en matière plastique rigide un premier canal de la filière correspondant à la formation d'une partie du profilé et, simultanément, on alimente en matière plastique souple un deuxième canal de la filière correspondant à la formation d'une autre partie du profilé, la solidarisation entre les matières plastiques rigide et souple s'effectuant à proximité de la section de sortie de ladite filière.

On peut obtenir ainsi, avantageusement, selon le procédé conforme à l'invention, un profilé présentant un fond à partir duquel s'élèvent des ailes latérales longitudinales dont les retours sont réalisés en matière plastique souple et qui peuvent s'étendre au moins en partie sensiblement parallèlement au fond dudit profilé pour couvrir au moins partiellement l'ouverture longitudinale du profilé et constituer des moyens de retenue de câbles ou de conducteurs électriques insérés dans ledit profilé formant un socle de goulotte.

Dans ce cas, le caractère souple desdits retours combiné au trajet non rectiligne, sinusoïdal ou en créneaux, des bords libres de ceux-ci permet avantageusement à l'installateur d'insérer facilement les câbles ou conducteurs électriques à l'intérieur du profilé.

L'invention concerne également un dispositif de fabrication selon la revendication 15 d'un profilé pouvant être obtenu par le procédé précité, comprenant une filière dont la section de sortie correspond globalement à la section dudit profilé et des moyens d'alimentation en matière plastique pâteuse de ladite filière, caractérisé en ce qu'il comprend un obturateur apte à obturer une partie de ladite section de sortie correspondant à la formation d'une partie dudit profilé, cet obturateur étant déplaçable à translation, parallèlement à sa largeur, suivant la largeur ou la hauteur de ladite partie de ladite section de sortie entre un premier point et un deuxième point espacés l'un de l'autre de manière à faire varier ladite partie de la section de sortie de la filière pour moduler le trajet d'au moins un bord libre longitudinal dudit profilé selon un trajet non rectiligne.

Selon des caractéristiques non limitatives et avantageuses du dispositif conforme à l'invention :
- l'obturateur pénètre à l'intérieur de ladite partie de la section de sortie de la filière ;
- l'extrémité de l'obturateur se positionne devant ladite partie de la section de sortie de la filière ;
- le dispositif comprend des moyens élastiques de pression dudit obturateur contre la face avant de la filière ;
- lesdits moyens élastiques de pression comprennent un ressort de compression ;
- les moyens de déplacement en translation dudit obturateur comprennent un coulisseau, dont est solidaire l'obturateur, monté à coulissement dans des glissières portées par la face avant de la filière et actionné à translation par des moyens de commande ;
- lesdits moyens de commande comprennent un système bielle/manivelle ;
- lesdits moyens de commande comprennent un système de vérin pneumatique, ou hydraulique, ou électrique ;
- lesdits moyens de commande comprennent un mécanisme oscillant ;
- ledit obturateur est déplaçable en continu ; et
- ledit obturateur est déplaçable de manière séquentielle.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique partielle en perspective d'un mode de réalisation du dispositif selon l'invention ;
- la figure 2 est une vue en éclaté de la figure 1 ;
- la figure 3 est une vue de face de la figure 1 ;
- la figure 4 est une vue en coupe selon le plan A-A de la figure 3 ;
- la figure 5 est une vue de détail de la figure 3 prise au niveau de l'obturateur ;
- la figure 6 est une vue en coupe selon le plan B-B de la figure 7 ;
- les figures 7 et 8 sont des vues schématiques de détail de l'obturateur du dispositif de la figure 1 positionné en point bas et en position intermédiaire ;
- les figures 9 et 10 sont des vues schématiques en perspective de deux exemples de réalisation de profilé obtenu à l'aide du dispositif représenté sur les figures 1 à 8 ;
- la figure 11 est une vue schématique partielle d'une variante de réalisation du dispositif conforme à l'invention ;
- la figure 12 est une vue en coupe selon le plan C-C de la figure 11 ;
- la figure 13 est une vue schématique partielle d'une autre variante du dispositif conforme à l'invention ;
- la figure 14 est une vue schématique en perspective du profilé obtenu à l'aide du dispositif de la figure 13 ;
- la figure 15 est une vue schématique partielle d'une autre variante du dispositif selon l'invention ; et
- la figure 16 est une vue schématique en perspective du profilé obtenu à l'aide du dispositif de la figure 15.

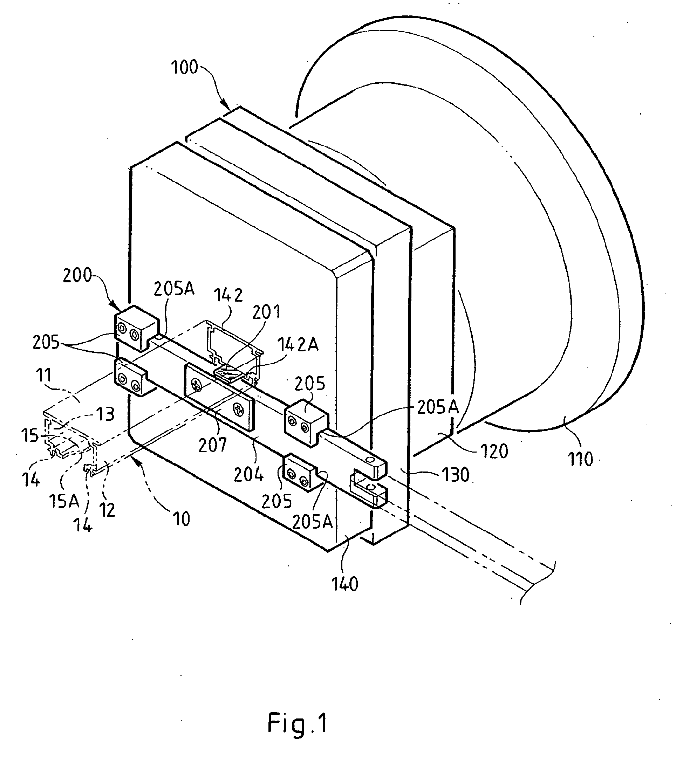

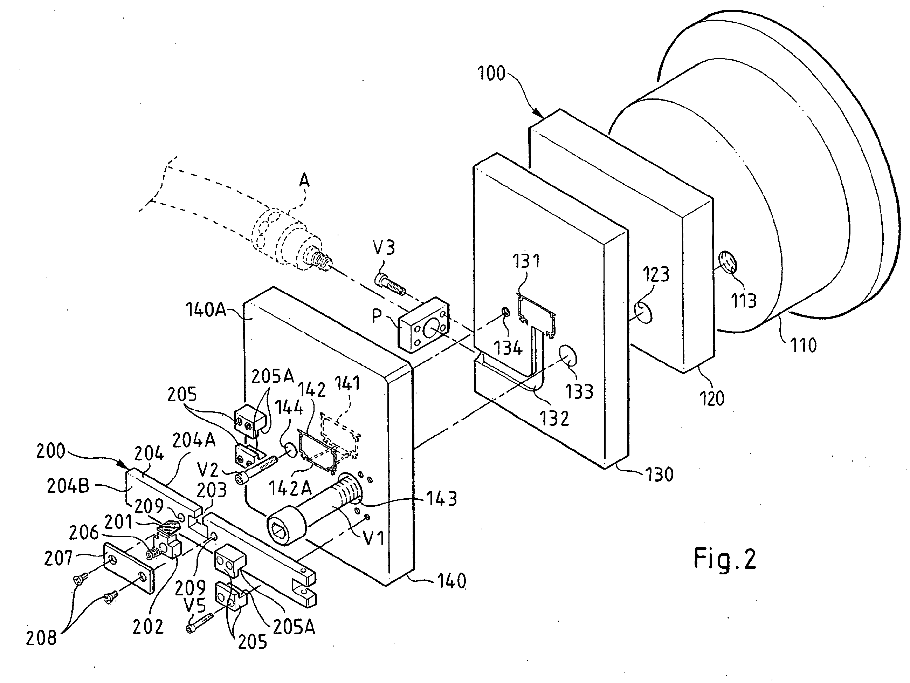

Sur les figures 1 à 8, on a représenté une partie d'un dispositif de fabrication par extrusion d'un profilé 10, ici un socle de goulotte, comprenant un fond 11 à partir duquel s'élèvent deux ailes latérales longitudinales 12, 13 parallèles dont au moins une porte un retour 15.

Ce dispositif de fabrication est une extrudeuse qui comprend de manière classique des moyens d'alimentation (non représentés) d'une matière se présentant sous la forme de poudre ou de granulats. Cette matière est par exemple une matière plastique du type PVC.

Ce dispositif de fabrication comprend également, de manière classique, des moyens (non représentés) pour chauffer cette matière et la rendre pâteuse.

En outre, le dispositif comprend une filière 100 constituée de plusieurs éléments assemblés l'un à l'autre au moyen de vis V1, V2.

Plus particulièrement, la filière 100 comporte un premier élément 110 globalement cylindrique traversé par un canal d'alimentation 111 en matière pâteuse.

La filière 100 comporte, en sortie du premier élément 110, trois plaques juxtaposées, à savoir une plaque arrière 120, une plaque intermédiaire 130 et une plaque avant 140.

Le premier élément 110 de la filière 100 comporte des orifices taraudés 113 destinés à accueillir des vis V1, V2 traversant des orifices 123, 133, 143 correspondants prévus dans les trois plaques 120, 130, 140 de la filière 100.

En outre, la plaque intermédiaire 130 est percée d'un orifice taraudé 134 accueillant une vis V2 traversant un orifice 144 prévu dans la plaque avant 140.

La plaque arrière 120 est traversée par le canal d'alimentation 111 qui débouche sur une section d'entrée 131 d'un premier canal 1 traversant la plaque intermédiaire 130.

Ce premier canal 1 permet la formation d'une partie du profilé 10.

Plus particulièrement, ce premier canal 1 permet la formation du fond 11 et des ailes latérales longitudinales 12, 13 du profilé 10 avec, en tête des ailes latérales longitudinales, des moyens de fixation d'un couvercle de fermeture du profilé.

Le premier canal 1 de la plaque intermédiaire 130 de la filière 100 débouche sur une section d'entrée 141 de la plaque avant 140.

Une partie de cette section d'entrée 141 correspond à la section du premier canal 1 qui se prolonge au travers de la plaque avant 140 pour déboucher sur une partie de la section de sortie 142 de la filière.

Une autre partie de la section d'entrée 141 forme l'entrée d'un deuxième canal 2 qui traverse la plaque avant 140 et débouche sur une autre partie 142A de la section de sortie 142 de la filière 100.

Ce deuxième canal 2 permet la formation du ou des retours 15 prévus en tête des ailes latérales longitudinales 12, 13 du profilé 10 à réaliser.

Le deuxième canal 2 est alimenté en matière pâteuse par un canal d'alimentation 132 coudé qui est formé dans la plaque intermédiaire 130.

Le canal d'alimentation 132 du deuxième canal 2 débouche à une extrémité dans la section d'entrée 141 de la plaque avant 140 et à une autre extrémité sur un côté de la plaque intermédiaire 130 de la filière dans un plot P d'alimentation fixé par des vis V3 à la filière et comportant un orifice d'arrivée d'un conduit A d'alimentation en une matière pâteuse.

La section de sortie 142 de la filière 100 prévue dans la face avant 140A de ladite plaque avant 140, correspond donc globalement à la section du profilé 10 à réaliser.

On remarquera que, dans le dispositif de fabrication représenté, il est possible d'alimenter le premier canal 1 de la filière avec une première matière pâteuse, via le canal d'alimentation 111, et, simultanément, d'alimenter le deuxième canal 2 de la filière avec une deuxième matière pâteuse différente de la première, via le canal d'alimentation 132.

La solidarisation entre les deux matières pâteuses différentes traversant les premier et deuxième canaux 1, 2 de la filière se fait par soudage à chaud à proximité de la section de sortie 142 de la plaque avant 140 de la filière 100.

Avantageusement, lorsqu'il s'agit d'un socle de goulotte, le premier canal 1 peut être alimenté en matière plastique rigide, pour former le fond et les ailes latérales longitudinales dudit socle, et le deuxième canal 2 peut être alimenté en matière plastique souple, pour former des retours souples desdites ailes latérales longitudinales dudit socle.

Il est à noter que le deuxième canal 2, s'étendant parallèlement à la partie du premier canal 1 correspondant à la formation du fond 11 du profilé, présente une largeur I correspondant à la distance séparant les ailes latérales longitudinales dudit profilé et communique en sortie avec le premier canal 1 pris au niveau des bords libres des ailes latérales longitudinales du profilé.

Ainsi, au travers de ce deuxième canal 2, on peut former deux retours dirigés l'un vers l'autre attachés chacun à une aile latérale longitudinale du profilé réalisé. Ces retours sont ici des retours en équerre s'étendant parallèlement au fond du profilé et peuvent couvrir une partie non négligeable de l'ouverture longitudinale du profilé prévue entre les deux ailes latérales longitudinales, de sorte qu'ils forment des moyens de retenue de câbles ou de conducteurs électriques introduits dans ledit profilé.

Selon une caractéristique particulièrement avantageuse du dispositif de fabrication représenté sur les figures 1 à 8, il est prévu, en sortie de filière 100, un obturateur 201 apte à obturer la partie 142A de la section de sortie 142 de la filière 100 correspondant à la formation des retours 15 du profilé 10.

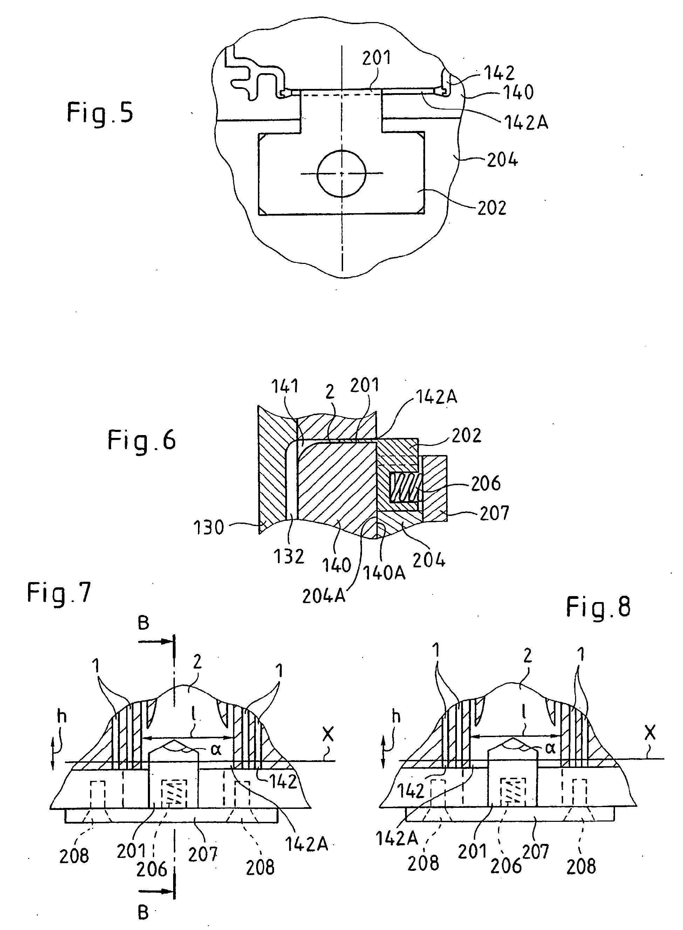

Cet obturateur 201 est déplaçable à translation suivant la largeur ou la hauteur I (largeur du deuxième canal 2) de ladite partie 142A de la section de sortie 142 entre un premier point et un deuxième point situés ici de part et d'autre de l'axe de symétrie du profilé (voir figures 7 et 8) de manière à faire varier ladite partie 142A de la section de sortie 142 de la filière 100 pour moduler chacun des trajets des bords libres 15A des retours 15 selon des trajets non rectilignes complémentaires.

Ici, l'obturateur comprend un poinçon 201 dont une extrémité forme un angle α compris entre environ 100 et 140°. Ce poinçon 201 est porté par une partie massive 202 en forme de T.

L'extrémité en forme d'angle ou de pointe de l'obturateur 201 pénètre à l'intérieur de ladite partie 142A de la section de sortie 142 de la filière 100, comme le montrent plus particulièrement les figures 1, 4, 6, 7 et 8.

Le poinçon 201 positionné dans une partie centrale de ladite partie 142A de la section de sortie 142, présente une largeur déterminant la largeur de l'ouverture longitudinale du profilé 10 définie entre les bords libres 15A desdits retours 15 de ce dernier.

Les moyens de déplacement en translation dudit obturateur 201 comprennent, selon le mode de réalisation représenté, un coulisseau 204 se présentant sous la forme d'une barre dont est solidaire l'obturateur 201 et monté à coulissement dans des glissières 205A prévues dans des plots 205 fixés au moyen de vis V5 à la face avant 140A de la plaque avant 140 de la filière 100. Le coulisseau 204 est actionné à translation par des moyens de commande 210.

Ici, la solidarisation de l'obturateur 201 au coulisseau 204 est réalisée par l'intermédiaire d'une coopération de formes entre le coulisseau 204 et la partie massive 202 portant le poinçon 201.

Plus particulièrement, le coulisseau 204 comporte une rainure 203, dont la forme correspond à la forme en T de la partie massive 202 portant le poinçon 201, et dans laquelle est engagée la partie massive 202.

Le coulisseau 204 est plaqué contre la face avant 140A de la plaque avant 140 de la filière 100 de telle sorte que, lors de son déplacement en translation, sa face arrière 204A glisse sur la face avant 140A de la plaque avant 140 de la filière 100.

En outre, il est prévu des moyens élastiques de pression dudit obturateur 201 contre la face avant 140A de la filière 100.

Ces moyens élastiques de pression comprennent un ressort de compression 206 engagé dans un logement borgne qui est prévu dans la partie massive 202 de l'obturateur et qui débouche du côté de la face avant 204B du coulisseau 204. Ce ressort de compression 206 est maintenu en compression dans son logement par l'intermédiaire d'une plaque 207 fixée sur la face avant 204B du coulisseau 204 par l'intermédiaire de vis 208 coopérant avec des orifices taraudés 209 prévus dans le coulisseau 204.

Les moyens de commande 210 du coulisseau 204 portant l'obturateur 201 permettent de le déplacer en continu pour former par exemple un bord libre d'un retour suivant un trajet sinusoïdal, ou de manière séquentielle pour former par exemple un bord libre d'un retour suivant un trajet en créneaux.

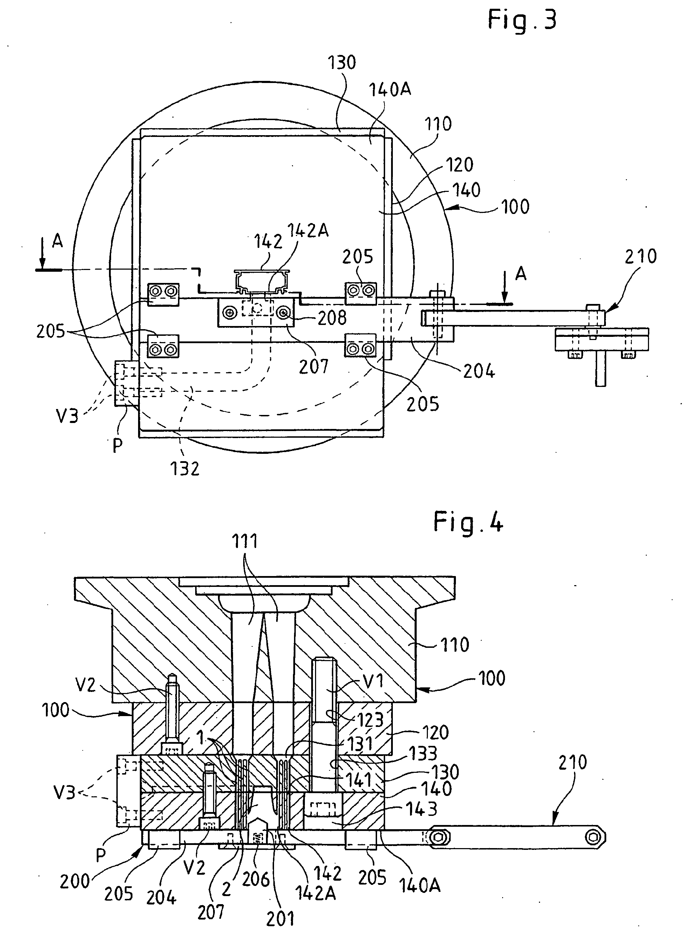

Ici, comme le montre plus particulièrement la figure 3, les moyens de commande du coulisseau 204 comprennent un système bielle/manivelle 210 mais, selon d'autres modes de réalisation non représentés, on pourrait prévoir que de tels moyens de commande comprennent un système de vérin pneumatique ou hydraulique, ou encore électrique, ou encore un mécanisme oscillant avec jeu de cames ou autre.

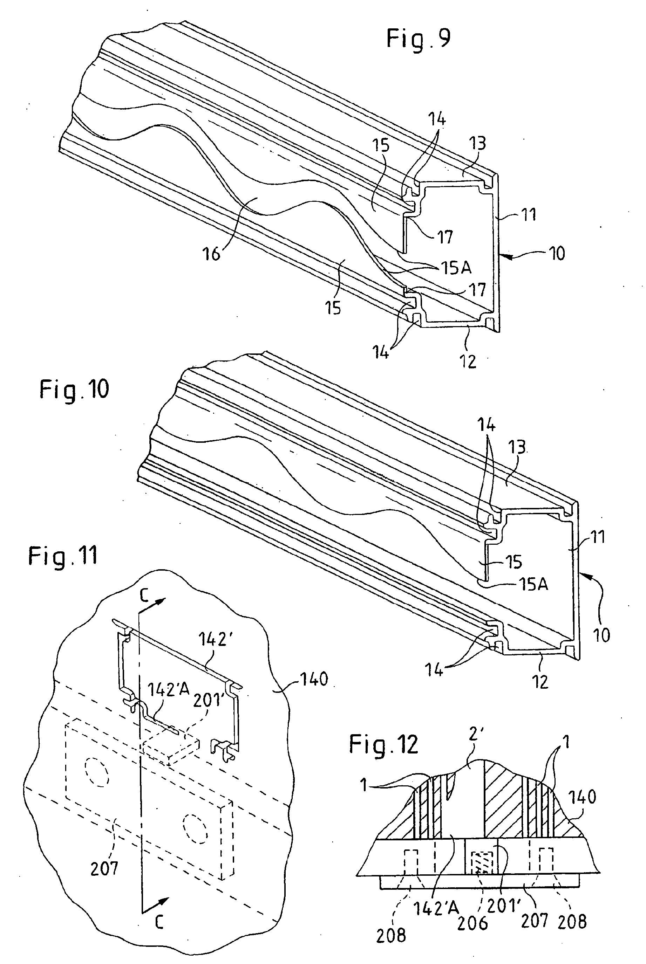

Selon une variante du dispositif représentée sur les figures 11 et 12, le deuxième canal 2' de la filière 100 présente une largeur égale sensiblement à la moitié de celle du deuxième canal 2 du dispositif représenté sur la figure 1 et se raccorde en sortie à une partie du premier canal 1 correspondant à la formation d'une desdites ailes latérales longitudinales.

Ainsi, ce dispositif permet de former un profilé à un seul retour.

De plus, selon cette variante, l'obturateur comprend en tant que poinçon une simple plaquette rectangulaire 201' dont l'extrémité se positionne devant et à proximité de la partie 142'A de la section de sortie 142' de la plaque avant 140 de la filière correspondant à la formation dudit retour et ne pénètre pas à l'intérieur de cette partie 142'A.

Un tel mode de réalisation est particulièrement avantageux pour la formation d'un profilé avec un seul retour à bord libre suivant un trajet non rectiligne.

Dans ce cas, l'obturateur se déplace entre un premier point et un deuxième point espacés l'un de l'autre (la figure 12 représente une position intermédiaire de l'obturateur où il recouvre une partie non percée de la filière 100).

A l'aide des deux variantes du dispositif de fabrication décrit précédemment, on met en oeuvre un procédé de fabrication par extrusion particulièrement avantageux permettant de réaliser notamment les profilés représentés sur les figures 9 et 10.

Selon une caractéristique essentielle de ce procédé de fabrication, on pousse une matière pâteuse au travers de la filière 100 dont la section de sortie 142, 142' correspond globalement à la section du profilé 10 à réaliser, et, durant l'opération de poussée, on fait varier, à l'aide de l'obturateur 201, 201', la partie 142A, 142'A de ladite section de sortie 142, 142' qui correspond à la formation du ou des retours 15 de manière à moduler le trajet de chaque bord libre 15A de chaque retour selon un trajet non rectiligne.

Lorsqu'on fait varier en continu cette partie 142A, 142'A de ladite section de sortie 142, 142' de la filière 100 on peut obtenir un ou des retours 15 dont le ou les bords libres suivent des trajets sinusoïdaux, comme cela est représenté sur les figures 9 et 10.

Le procédé mis en oeuvre par le dispositif de fabrication représenté sur les figures 1 à 8, consiste à alimenter en matière plastique rigide le premier canal 1 de la filière 100 correspondant à la formation du fond 11, des ailes latérales longitudinales 12, 13 du profilé 10 ainsi que les moyens d'accrochage 14 d'un couvercle de fermeture et, simultanément, d'alimenter en matière plastique souple le deuxième canal 2 de la filière 100 correspondant à la formation des retours 15 portés par les ailes latérales longitudinales 12, 13 correspondantes, la solidarisation des matières plastiques rigide et souple s'effectuant à chaud à proximité de la section de sortie 142 de la filière 100.

Cette solidarisation est réalisée par soudage selon une ligne de soudage 17 apparaissant sur les profilés réalisés (voir figure 9).

Il est intéressant de noter que la largeur de l'obturateur 201 du dispositif représenté correspond à la largeur de l'ouverture longitudinale 16 du profilé définie entre les deux bords libres 15A sinusoïdaux des retours 15 dudit profilé 10 (voir figure 9).

Le déplacement de l'obturateur 201 selon l'axe X (voir figures 7 et 8) permet d'obtenir au cours de l'extrusion du profilé 10 un retour 15 en point haut d'un côté de l'axe du profilé 10 et un autre retour 15 en point bas de l'autre côté de l'axe du profilé (voir figure 7).

Au cours du déplacement entre son premier et son deuxième points, l'obturateur 201 passe par une position intermédiaire représentée sur la figure 8.

On obtient en sortie de filière un profilé, tel que représenté sur la figure 9, dont les retours 15 portés par les ailes latérales longitudinales 12, 13 parallèles présentent une certaine largeur en s'étendant parallèlement au fond 11 du profilé en couvrant partiellement l'ouverture longitudinale de celui-ci.

De ce fait, de tels retours souples forment avantageusement des moyens de retenue des câbles ou conducteurs électriques courant dans un tel profilé.

Au travers de l'ouverture longitudinale 16 d'un tel profilé, l'installateur peut ainsi facilement insérer des câbles ou conducteurs électriques à l'intérieur dudit profilé 10, en déformant en flexion lesdits retours souples.

Le seuil de chargement du profilé 10 obtenu correspond au point culminant ou point haut de chaque retour 15 de celui-ci.

Pour former un profilé avec un seul retour 15, tel que représenté sur la figure 10, il suffit de découper un des deux retours 15 du profilé 10 sortant de la filière 100 (voir figure 9) du dispositif représenté sur la figure 1. Avantageusement, le retour 15 découpé est recyclé.

Le procédé mis en oeuvre à l'aide de la variante du dispositif représenté sur les figures 11 et 12 permet avantageusement de former directement le profilé 10 représenté sur la figure 10 en sortie de filière, car la partie 142'A de la section de sortie 142' est raccordée à une partie de la section de sortie correspondant à la formation d'une seule aile latérale longitudinale.

Dans ce cas, le procédé mis en oeuvre par ce dispositif consiste à déplacer à translation l'obturateur 201' entre un premier point et un deuxième point espacés l'un de l'autre suivant la largeur ou la hauteur de ladite partie 142'A, une face d'extrémité dudit obturateur venant à effleurement de la section de sortie 142'. Dans le présent cas, en position intermédiaire (représentée sur la figure 12) l'obturateur 201' est amené à venir à cheval entre une partie massive de la filière et le deuxième canal 2' débouchant dans la partie 142'A de la section de sortie 142' de la filière 100.

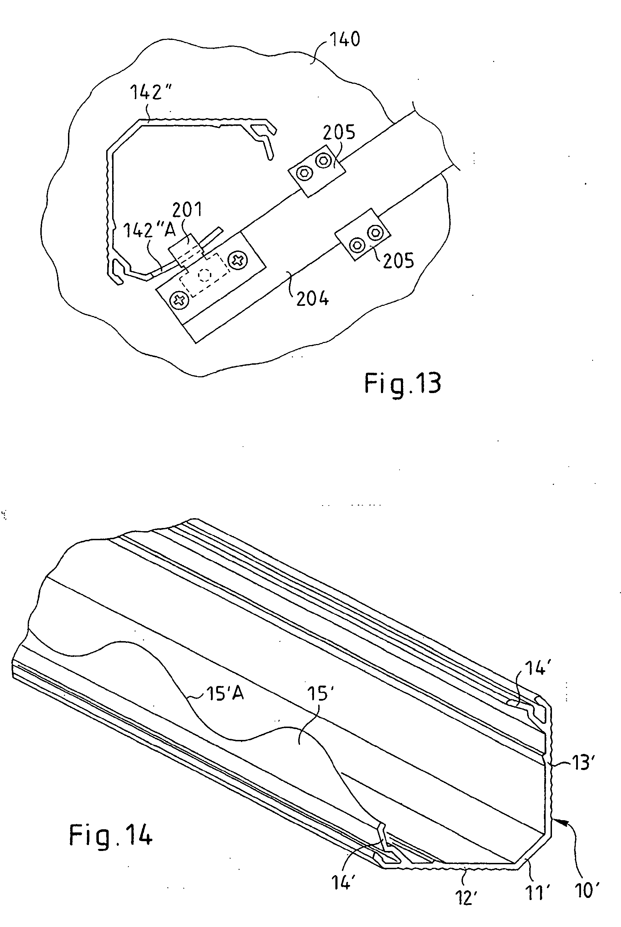

Selon une autre variante du dispositif représentée sur la figure 13, la section de sortie 142" de la filière 100 présente une forme correspondant à une section en V d'un profilé formant un socle de goulotte.

Ici, le deuxième canal de la filière 100 alimente une partie 142"A de cette section de sortie 142" correspondant à la formation d'une paroi prolongeant le retour situé à l'extrémité d'une aile latérale longitudinale inclinée du profilé 10' en V.

Ce deuxième canal, non référencé, se raccorde en sortie à une partie du premier canal correspondant à la formation de l'aile latérale longitudinale correspondante.

Ici, le poinçon de l'obturateur 201 pénètre à l'intérieur de la partie 142"A de la section de sortie 142" de la filière et navigue sur la largeur ou la hauteur de celle-ci afin de moduler le bord libre de cette paroi selon un trajet non rectiligne.

L'obturateur 201 est identique à l'obturateur du dispositif représenté sur la figure 1, et les moyens de déplacement de l'obturateur comprennent également le coulisseau coulissant dans les rainures des plots 205 montés en façade de la filière 100.

En fonction de la distance de déplacement de l'obturateur 201 entre son premier point et son deuxième point espacés l'un de l'autre, on obtient en sortie de filière une chute de matière sortant par la partie 142"A de la section de sortie 142". Cette chute de matière sort dissociée du profilé 10".

A l'aide de la variante du dispositif représentée sur la figure 13, on met en oeuvre un procédé selon l'invention similaire à celui mis en oeuvre à l'aide du dispositif représenté sur les figures 1 ou 11, ici le déplacement de l'obturateur 201 permettant d'obtenir au cours de l'extrusion du profilé 10' une paroi 15' prolongeant le retour d'une des ailes latérales longitudinales dudit profilé dont le bord libre longitudinal présente un trajet non rectiligne, ici un trajet sinusoïdal.

Le profilé 10' obtenu en sortie de la filière du dispositif représenté sur la figure 13 est représenté sur la figure 14. Il comporte une section globalement en V avec un fond 11' et deux ailes latérales longitudinales 12', 13' s'élevant à partir du fond selon des directions divergentes et portant en tête des retours 14' pourvus de moyens d'accrochage d'un couvercle de fermeture. Une desdites ailes latérales longitudinales 12' du profilé 10' présente un retour prolongé par la paroi 15' dont le bord libre 15'A longitudinal suit un trajet sinusoïdal.

La paroi 15' peut être souple ou rigide en fonction de la matière d'alimentation utilisée.

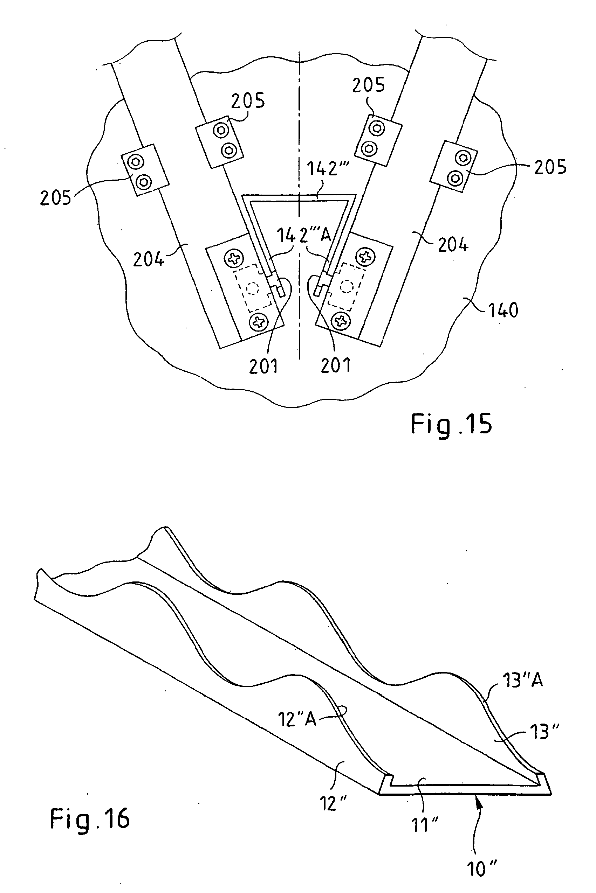

Selon une autre variante du dispositif représentée sur la figure 15, la section de sortie 142"' de la face avant 140 de la filière correspond à la section du profilé 10" représenté sur la figure 16.

Ici, le profilé 10" comporte un fond 11" et deux ailes latérales longitudinales 12", 13" qui s'élèvent à partir du fond selon des directions convergentes.

Lesdites ailes latérales longitudinales 12", 13" ne présentent aucun retour et le dispositif représenté sur la figure 15 permet de moduler les bords libres longitudinaux desdites ailes latérales longitudinales 12", 13" selon des trajets non rectilignes identiques, ici des trajets sinusoïdaux.

Pour ce faire, il est prévu deux obturateurs 201 travaillant simultanément et permettant de faire varier deux parties 142"'A de la section de sortie 142"' correspondant à la formation desdites ailes latérales longitudinales 12", 13", en obturant ces parties de manière à moduler le trajet des deux bords libres 12"A, 13"A longitudinaux dudit profilé 10" selon un trajet non rectiligne, ici sinusoïdal.

Le déplacement des deux obturateurs 201 est un déplacement en translation identique au déplacement de l'obturateur 201 du dispositif représenté sur la figure 1 et ne sera pas décrit ici une nouvelle fois.

Pour l'essentiel, chaque obturateur 201 est solidaire d'un coulisseau 204 monté à coulissement dans des rainures portées par des plots 205, la commande des deux obturateurs 201 étant coordonnée par un dispositif d'asservissement permettant de déplacer simultanément les deux obturateurs 201.

Le profilé 10" obtenu à la sortie du dispositif représenté sur la figure 15 peut par exemple servir de guide câble d'un appareillage hi-fi ou électroménager.

Bien entendu, toute forme de pilotage ou d'asservissement de contrôle est envisageable pour commander l'obturateur dudit dispositif selon l'invention en fonction de la sortie du profilé de la filière.

En particulier, on pourra prévoir, à l'aide du procédé selon l'invention, de moduler le trajet d'un bord libre d'un retour d'une cloison de séparation d'un profilé permettant de fractionner le volume intérieur de ce dernier.

## Revendications

1. Procédé de fabrication par extrusion d'un profilé creux (10) comportant une ouverture longitudinale, ce procédé comprenant une opération consistant à pousser une matière pâteuse au travers d'une filière (100) dont la section de sortie (142) correspond globalement à la section dudit profilé (10), **caractérisé en ce que**, durant l'opération de poussée, on fait varier une partie (142A) de ladite section de sortie (142) de manière à moduler le trajet d'au moins un bord libre (15A) longitudinal dudit profilé (10) selon un trajet non rectiligne et **en ce que**, pour faire varier cette partie (142A ; 142'A ; 142"A ; 142"'A) de la section de sortie (142 ; 142' ; 142" ; 142"') de la filière (100), on obture partiellement cette partie (142A ; 142'A ; 142"A ; 142"'A) à l'aide d'un obturateur (201 ; 201') dont on positionne l'extrémité devant cette partie et que l'on déplace à translation, parallèlement à la largeur de cette extrémité, le long (I) de ladite partie (142A ; 142'A ; 142"A ; 142"'A) entre un premier point et un deuxième point espacés l'un de l'autre.

2. Procédé selon la revendication 1, **caractérisé en ce qu'**on fait varier deux parties (142"'A) différentes de ladite section de sortie (142"') de manière à moduler le trajet de deux bords libres (12"A, 13"A) longitudinaux du profilé (10") selon un trajet non rectiligne.

3. Procédé selon la revendication 1, **caractérisé en ce qu'**on fait varier cette partie de la section de sortie au moyen dudit obturateur en sorte de moduler simultanément deux bords libres longitudinaux selon des trajets non rectilignes.

4. Procédé selon l'une quelconque des revendications 1 à 3, **caractérisé en ce qu'**on fait varier en continu chaque partie (142A ; 142'A ; 142"A ; 142"'A) de la section de sortie (142 ; 142' ; 142" ; 142"') de la filière (100) qui définit un bord libre longitudinal dont le trajet est modulé.

5. Procédé selon l'une quelconque des revendications 1 à 3, **caractérisé en ce qu'**on fait varier de manière séquentielle chaque partie (142A ; 142'A ; 142"A ; 142"'A) de la section de sortie (142 ; 142', 142", 142"') de la filière (100) qui définit un bord libre longitudinal dont le trajet est modulé.

6. Procédé selon l'une des revendications 1 à 5, **caractérisé en ce que** l'extrémité de l'obturateur est dirigée vers ladite partie de section de sortie.

7. Procédé selon la revendication 6, **caractérisé en ce que** l'extrémité de l'obturateur (201) pénètre partiellement à l'intérieur de chaque partie (142A ; 142"A ; 142"'A) de la section de sortie (142 ; 142" ; 142"') de la filière (100) qui définit un bord libre longitudinal dont le trajet est modulé.

8. Procédé selon la revendication 7, **caractérisé en ce que** l'obturateur pénètre à l'intérieur de la section de sortie par une extrémité en pointe.

9. Procédé selon l'une des revendications 1 à 8, **caractérisé en ce que**, lors de l'opération de poussée, on forme, au travers de ladite partie (142'A ; 142"A) de la section de sortie (142' ; 142") de la filière (100), un retour d'une aile latérale ou d'une cloison de séparation dudit profilé, et, durant cette opération de poussée, en faisant varier ladite partie (142'A ; 142"A) de la section de sortie (142' ; 142"), on module le trajet du bord libre dudit retour selon un trajet non rectiligne.

10. Procédé selon l'une des revendications 1 à 8, **caractérisé en ce que**, lors de l'opération de poussée, on forme, au travers de ladite partie (142A) de la section de sortie (142) de la filière (100), deux retours (15) dirigés l'un vers l'autre de deux ailes latérales longitudinales (12, 13) dudit profilé (10), et, durant cette opération de poussée, en faisant varier ladite partie (142A) de la section de sortie (142) correspondant à la formation des retours, on module simultanément les trajets des bords libres (15A) desdits retours (15) selon des trajets non rectilignes.

11. Procédé selon la revendication 10, **caractérisé en ce qu'**on module les trajets des bords libres desdits retours selon des trajets non rectilignes identiques.

12. Procédé selon la revendication 10, **caractérisé en ce qu'**on module les trajets des bords libres desdits retours selon des trajets non rectilignes différents.

13. Procédé selon l'une des revendications 10 à 12, **caractérisé en ce qu'**on élimine par découpage un des deux retours du profilé obtenu par extrusion pour former un profilé (10) à un seul retour (15) à bord libre non rectiligne.

14. Procédé selon l'une des revendications 1 à 13, **caractérisé en ce qu'**on alimente en matière plastique rigide un premier canal (1) de la filière (100) correspondant à la formation d'une partie du profilé, et, simultanément, on alimente en matière plastique souple un deuxième canal (2) de la filière (100) correspondant à la formation d'une autre partie du profilé (10), la solidarisation entre les matières plastiques rigide et souple s'effectuant à proximité de la section de sortie (142) de ladite filière (100).

15. Dispositif de fabrication d'un profilé (10 ; 10' ; 10") creux comportant une ouverture longitudinale pouvant être obtenu par le procédé selon l'une des revendications 1 à 14, comprenant une filière (100) dont la section de sortie (142 ; 142' ; 142" ; 142"') correspond globalement à la section dudit profilé (10 ; 10' ; 10") et des moyens d'alimentation en matière plastique pâteuse de ladite filière, **caractérisé en ce qu'**il comprend un obturateur (201 : 201') dont l'extrémité se positionne devant, et obture, une partie (142A ; 142'A ; 142"A ; 142"'A) de ladite section de sortie (142 ; 142' ; 142" ; 142'") correspondant à la formation d'une partie dudit profilé (10), cet obturateur (201 ; 201') étant déplaçable à translation, parallèlement à la largeur de son extrémité, le long (I) de ladite partie (142A ; 142'A ; 142"A ; 142"'A) de ladite section de sortie (142 ; 142' ; 142" ; 142"') entre un premier point et un deuxième point espacés l'un de l'autre de manière à faire varier ladite partie (142A ; 142'A ; 142"A ; 142"'A) de la section de sortie (142 ; 142' , 142" ; 142"') de la filière pour moduler le trajet d'au moins un bord libre (15A ; 15'A ; 12"A, 13"A) longitudinal dudit profilé (10 ; 10' ; 10") selon un trajet non rectiligne.

16. Dispositif selon la revendication 15, **caractérisé en ce que** l'extrémité de l'obturateur est dirigée vers ladite partie de la section de sortie.

17. Dispositif selon la revendication 15 ou la revendication 16, caractérisé en que l'extrémité de l'obturateur (201) pénètre à l'intérieur de ladite partie (142A ; 142"A ; 142"'A) de la section de sortie (142 ; 142" ; 142"') de la filière (100).

18. Dispositif selon la revendication 17, **caractérisé en ce que** cette extrémité est en pointe.

19. Dispositif selon l'une des revendications 15 à 18, **caractérisé en ce qu'**il comprend des moyens élastiques de pression dudit obturateur (201 ; 201') contre la face avant (140A) de la filière (100).

20. Dispositif selon la revendication 19, **caractérisé en ce que** lesdits moyens élastiques de pression comprennent un ressort de compression (206).

21. Dispositif selon l'une des revendications 15 à 20, **caractérisé en ce que** les moyens de déplacement en translation dudit obturateur (201 ; 201') comprennent un coulisseau (204), dont est solidaire l'obturateur (201 ; 201'), monté à coulissement dans des glissières (205A) portées par la face avant (140A) de la filière (100) et actionné à translation par des moyens de commande (210).

22. Dispositif selon la revendication 21, **caractérisé en ce que** lesdits moyens de commande comprennent un système bielle/manivelle (210).

23. Dispositif selon la revendication 21, **caractérisé en ce que** lesdits moyens de commande comprennent un système de vérin pneumatique, ou hydraulique, ou électrique.

24. Dispositif selon la revendication 21, **caractérisé en ce que** lesdits moyens de commande comprennent un mécanisme oscillant.

25. Dispositif selon l'une des revendications 15 à 24, **caractérisé en ce que** ledit obturateur (201 ; 201') est déplaçable en continu.

26. Dispositif selon l'une des revendications 15 à 24, **caractérisé en ce que** ledit obturateur (201 ; 201') est déplaçable de manière séquentielle.

## Claims

1. A method of manufacturing, by extrusion, a hollow extruded member (10) comprising a longitudinal opening, the method comprising an operation consisting of pushing a pasty material through a die (100) the outlet cross-section (142) of which generally corresponds to the cross-section of said extruded member (10), **characterized in that**, during the pushing operation, a part (142A) of said outlet cross-section (142) is made to vary so as to modulate the path of at least one longitudinal free edge (15A) of said extruded member (10) according to a non-rectilinear path, and **in that**, to vary that part (142A ; 142'A ; 142"A ; 142"'A) of the outlet cross-section (142 ; 142' ; 142" ; 142"') of the die (100), that part (142A ; 142'A ; 142"A ; 142"'A) is partially obturated using an obturator (201 ; 201') the end of which is positioned in front of that part and which is moved in translation, parallel to the width of that end, along (I) said part (142A ; 142'A ; 142"A ; 142"'A) between a first point and a second point which are spaced apart from each other.

2. A method according to claim 1, **characterized in that** two different parts (142"'A) of said outlet cross-section (142"') are made to vary so as to modulate the path of two longitudinal free edges (12"A, 13"A) of the extruded member (10") according to a non-rectilinear path.

3. A method according to claim 1, **characterized in that** that part of the outlet cross-section is made to vary by means of said obturator so as to simultaneously modulate two longitudinal free edges according to non-rectilinear paths.

4. A method according to any one of claims 1 to 3, **characterized in that** each part (142A ; 142'A ; 142"A ; 142"'A) of the outlet cross-section (142 ; 142' ; 142" ; 142"') of the die (100) that defines a longitudinal free edge the path of which is modulated, is made to vary continuously.

5. A method according to any one of claims 1 to 3, **characterized in that** each part (142A ; 142'A ; 142"A ; 142"'A) of the outlet cross-section (142 ; 142' ; 142" ; 142"') of the die (100) that defines a longitudinal free edge the path of which is modulated, is made to vary sequentially.

6. A method according to one of claims 1 to 5, **characterized in that** the end of the obturator is directed towards said outlet cross-section part.

7. A method according to claim 6, **characterized in that** the end of the obturator (201) partially enters inside each part (142A ; 142"A ; 142"'A) of the outlet cross-section (142 ; 142" ; 142"') of the die (100) that defines a longitudinal free edge the path of which is modulated.

8. A method according to claim 7, **characterized in that** the obturator enters inside the outlet cross-section by a pointed end.

9. A method according to one of claims 1 to 8, **characterized in that** , during the pushing operation, through said part (142'A ; 142"A) of the outlet cross-section (142' ; 142") of the die (100), a flange of a lateral wing or of a separating partition of said extruded member is formed and, during that pushing operation, by varying said part (142'A ; 142"A) of the outlet cross-section (142' ; 142"), the path of the free edge of said flange is modulated according to a non-rectilinear path.

10. A method according to one of claims 1 to 8, **characterized in that** , during the pushing operation, through said part (142A) of the outlet cross-section (142) of the die (100), two flanges (15) directed towards each other of two longitudinal lateral wings (12, 13) of said extruded member (10), are formed and, during that pushing operation, by varying said part (142A) of the outlet cross-section (142), corresponding to the formation of the flanges, the paths of the free edges (15A) of said flanges (15) are simultaneously modulated according to non-rectilinear paths.

11. A method according to claim 10, **characterized in that** the paths of the free edges of said flanges are modulated according to identical non-rectilinear paths.

12. A method according to claim 10, **characterized in that** the paths of the free edges of said flanges are modulated according to different non-rectilinear paths.

13. A method according to one of claims 10 to 12, **characterized in that** one of the two flanges of the extruded member obtained by extrusion is eliminated by cutting to form an extruded member (10) having a single flange (15) with a non-rectilinear edge.

14. A method according to one of claims 1 to 13, **characterized in that** rigid plastic material is supplied to a first channel (1) of the die (100) corresponding to the formation of a part of the extruded member, and, simultaneously, flexible plastic is supplied to a second channel (2) of the die (100) corresponding to the formation of another part of the extruded member (10), the joining together of the rigid and flexible plastic materials being carried out in the vicinity of the outlet cross-section (142) of said die (100).

15. A device for manufacturing a hollow extruded member (10 ; 10' ; 10") comprising a longitudinal opening capable of being obtained by the method according to one of claims 1 to 14, comprising a die (100) the outlet cross-section (142 ; 142' ; 142" ; 142"') of which generally corresponds to the cross-section of said extruded member (10 ; 10' ; 10") and means for supplying said die with pasty plastic material, **characterized in that** it comprises an obturator (201 ; 201') the end of which takes position in front of, and obturates, a part (142A ; 142'A ; 142"A ; 142"'A) of said outlet cross-section (142 ; 142' ; 142" ; 142"') corresponding to the formation of a part of said extruded member (10), that obturator (201 ; 201') being movable in translation, parallel to the width of its end, along (I) said part (142A ; 142'A ; 142"A ; 142"'A) of said outlet cross-section (142 ; 142' ; 142" ; 142"') between a first point and a second point which are spaced apart from each other so as to vary said part (142A ; 142'A ; 142"A ; 142"'A) of the outlet cross-section (142 ; 142' , 142"; 142'") of the die to modulate the path of at least one longitudinal free edge (15A ; 15'A ; 12"A, 13"A) of said extruded member (10 ; 10' ; 10") according to a non-rectilinear path.

16. A device according to claim 15, **characterized in that** the end of the obturator is directed towards said part of the outlet cross-section.

17. A device according to claim 15 or claim 16, **characterized in that** the end of the obturator (201) enters inside said part (142A ; 142"A ; 142"'A) of the outlet cross-section (142 ; 142" ; 142"') of the die (100).

18. A device according to claim 17, **characterized in that** that end is pointed.

19. A device according to one of claims 15 to 18, **characterized in that** it comprises elastic means for pressing said obturator (201 ; 201') against the front face (140A) of the die (100).

20. A device according to claim 19, **characterized in that** said elastic pressing means comprise a compression spring (206).

21. A device according to one of claims 15 to 20, **characterized in that** the means for moving said obturator (201 ; 201') in translation comprise a slide (204), to which the obturator (201 ; 201'), is attached, slidingly mounted in runners (205A) which are carried by the front face (140A) of the die (100) and which is actuated in translation by actuating means (210).

22. A device according to claim 21, **characterized in that** said actuating means comprise a connecting rod/crank system (210).

23. A device according to claim 21, **characterized in that** said actuating means comprise a pneumatic, hydraulic, or electric jack system.

24. A device according to claim 21, **characterized in that** said actuating means comprise an oscillating mechanism.

25. A device according to one of claims 15 to 24, **characterized in that** said obturator (201 ; 201') is continuously movable.

26. A device according to one of claims 15 to 24, **characterized in that** said obturator (201 ; 201') is sequentially movable.

## Patentansprüche

1. Verfahren zur Herstellung eines Hohlprofils (10) mit einer Längsöffnung durch Extrusion, wobei das Verfahren einen Vorgang umfasst, der darin besteht, einen pastösen Stoff durch ein Mundstück (100) zu pressen, dessen Austrittsquerschnitt (142) allgemein dem Querschnitt des Profils (10) entspricht,
**dadurch gekennzeichnet, dass** während des Pressvorgangs ein Teil (142A) des Austrittsquerschnitts (142) solchermaßen verändert wird, dass der Verlauf wenigstens eines freien Längsrands (15A) des Profils (10) gemäß einem nicht geradlinigen Verlauf abgewandelt wird, und dass zum Verändern dieses Teils (142A; 142'A; 142"A; 142"'A) des Austrittsquerschnitts (142; 142'; 142"; 142"') des Mundstücks (100) das Teil (142A; 142'A; 142"A; 142"'A) mithilfe eines Verschlussstücks (201; 201') teilweise versperrt wird, dessen Ende vor diesem Teil positioniert ist, und dass es längs (I) des Teils (142A; 142'A; 142"A; 142"'A) parallel zur Breite des Endes zwischen einem ersten Punkt und einem zweiten Punkt, die voneinander beabstandet sind, translatorisch verschoben wird.

2. Verfahren nach Anspruch 1,
**dadurch gekennzeichnet, dass** zwei verschiedene Teile (142"'A) des Austrittsquerschnitts (142"') solchermaßen verändert werden, dass der Verlauf von zwei freien Längsrändern (12"A, 13"A) des Profils (10") gemäß einem nicht geradlinigen Verlauf abgewandelt wird.

3. Verfahren nach Anspruch 1,
**dadurch gekennzeichnet, dass** der Teil des Austrittsquerschnitts mithilfe des Verschlussstücks solchermaßen verändert wird, dass gleichzeitig zwei freie Längsränder gemäß nicht geradlinigen Verläufen abgewandelt werden.

4. Verfahren nach einem der Ansprüche 1 bis 3,
**dadurch gekennzeichnet, dass** jedes Teil (142A; 142'A; 142"A; 142"'A) des Austrittsquerschnitts (142; 142'; 142"; 142"') des Mundstücks (100), das einen freien Längsrand definiert, dessen Verlauf abgewandelt wird, kontinuierlich verändert wird.

5. Verfahren nach einem der Ansprüche 1 bis 3,
**dadurch gekennzeichnet, dass** jedes Teil (142A; 142'A; 142"A; 142"'A) des Austrittsquerschnitts (142; 142'; 142"; 142"') des Mundstücks (100), das einen freien Längsrand definiert, dessen Verlauf abgewandelt wird, sequentiell verändert wird.

6. Verfahren nach einem der Ansprüche 1 bis 5,
**dadurch gekennzeichnet, dass** das Ende des Verschlussstücks auf das Teil des Austrittsquerschnitts gerichtet ist.

7. Verfahren nach Anspruch 6,
**dadurch gekennzeichnet, dass** das Ende des Verschlussstücks (201) innen in jedes Teil (142A; 142'A; 142"A; 142"'A) des Austrittsquerschnitts (142; 142'; 142"; 142"') des Mundstücks (100), das einen freien Längsrand definiert, dessen Verlauf abgewandelt wird, zum Teil eindringt.

8. Verfahren nach Anspruch 7,
**dadurch gekennzeichnet, dass** das Verschlussstück innen in den Austrittsquerschnitt mit einem spitzen Ende eindringt.

9. Verfahren nach einem der Ansprüche 1 bis 8,
**dadurch gekennzeichnet, dass** während des Pressvorgangs ein Rücksprung eines Seitenschenkels oder einer Trennwand des Profils durch das Teil (142'A; 142"A) des Austrittsquerschnitts (142'; 142") des Mundstücks (100) hindurch geformt wird und während dieses Pressvorgangs durch Verändern des Teils (142'A; 142"A) des Austrittsquerschnitts (142'; 142") der Verlauf des freien Rands gemäß einem nicht geradlinigen Verlauf abgewandelt wird.

10. Verfahren nach einem der Ansprüche 1 bis 8,
**dadurch gekennzeichnet, dass** während des Pressvorgangs zwei zueinander weisende Rücksprünge (15) von zwei Seitenlängsschenkeln (12, 13) des Profils (10) durch das Teil (142A) des Austrittsquerschnitts (142) des Mundstücks (100) hindurch geformt werden und während dieses Pressvorgangs durch Verändern des der Formung der Rücksprünge entsprechenden Teils (142A) des Austrittsquerschnitts (142) die Verläufe der freien Ränder (15A) der Rücksprünge (15) gemäß nicht geradlinigen Verläufen gleichzeitig abgewandelt werden.

11. Verfahren nach Anspruch 10,
**dadurch gekennzeichnet, dass** die Verläufe der freien Ränder der Rücksprünge gemäß identischen nicht geradlinigen Verläufen abgewandelt werden.

12. Verfahren nach Anspruch 10,
**dadurch gekennzeichnet, dass** die Verläufe der freien Ränder der Rücksprünge gemäß unterschiedlichen nicht geradlinigen Verläufen abgewandelt werden.

13. Verfahren nach einem der Ansprüche 10 bis 12,
**dadurch gekennzeichnet, dass** einer der beiden Rücksprünge des durch Extrusion erlangten Profils durch Abtrennen entfernt wird, um ein Profil (10) mit einem einzigen Rücksprung (15) mit nicht geradlinigem freiem Rand zu formen.

14. Verfahren nach einem der Ansprüche 1 bis 13,
**dadurch gekennzeichnet, dass** ein erster Kanal (1) des Mundstücks (100), der der Formung eines Teils des Profils entspricht, mit hartem Kunststoff gespeist wird und gleichzeitig ein zweiter Kanal (2) des Mundstücks (100), der der Formung eines anderen Teils des Profils entspricht, mit weichem Kunststoff gespeist wird, wobei die Verbindung des harten und des weichen Kunststoffs in der Nähe des Austrittsquerschnitts (142) des Mundstücks (100) erfolgt.

15. Vorrichtung zur Herstellung eines Hohlprofils (10; 10'; 10") mit einer Längsöffnung, das durch das Verfahren nach einem der Ansprüche 1 bis 14 erlangt werden kann, mit einem Mundstück (100), dessen Austrittsquerschnitt (142; 142'; 142"; 142"') allgemein dem Querschnitt des Profils (10; 10'; 10") entspricht, und Mitteln zum Speisen des Mundstücks mit pastösem Kunststoff,
**dadurch gekennzeichnet, dass** sie ein Verschlussstück (201; 201') umfasst, dessen Ende vor einem der Formung eines Teils des Profils (10) entsprechenden Teil (142A; 142'A; 142"A; 142"'A) des Austrittsquerschnitts (142; 142'; 142"; 142"') positioniert ist und dieses versperrt, wobei das Verschlussstück (201; 201') parallel zur Breite seines Endes längs (I) des Teils (142A; 142'A; 142"A; 142"'A) des Austrittsquerschnitts (142; 142'; 142"; 142"') zwischen einem ersten Punkt und einem zweiten Punkt, die voneinander beabstandet sind, solchermaßen translatorisch verschiebbar ist, dass das Teil (142A; 142'A; 142"A; 142"'A) des Austrittsquerschnitts (142; 142'; 142"; 142"') des Mundstücks verändert wird, um den Verlauf wenigstens eines freien Längsrands (15A; 15'A; 12"A, 13"A) des Profils (10; 10'; 10") gemäß einem nicht geradlinigen Verlauf abzuwandeln.

16. Vorrichtung nach Anspruch 15,
**dadurch gekennzeichnet, dass** das Ende des Verschlussstücks auf das Teil des Austrittsquerschnitts gerichtet ist.

17. Vorrichtung nach Anspruch 15 oder Anspruch 16,
**dadurch gekennzeichnet, dass** das Ende des Verschlussstücks (201) innen in das Teil (142A; 142"A; 142"'A) des Austrittsquerschnitts (142; 142"; 142"') des Mundstücks eindringt.

18. Vorrichtung nach Anspruch 17,
**dadurch gekennzeichnet, dass** das Ende spitz ist.

19. Vorrichtung nach einem der Ansprüche 15 bis 18,
**dadurch gekennzeichnet, dass** sie elastische Mittel zum Drücken des Verschlussstücks (201; 201') gegen die Vorderseite (140A) des Mundstücks (100) umfasst.

20. Vorrichtung nach Anspruch 19,
**dadurch gekennzeichnet, dass** die elastischen Druckmittel eine Druckfeder (206) aufweisen.

21. Vorrichtung nach einem der Ansprüche 15 bis 20,
**dadurch gekennzeichnet, dass** die Mittel zum translatorischen Verschieben des Verschlussstücks (201; 201') eine Gleitführung (204) aufweisen, mit der das Verschlussstück (201; 201') fest verbunden ist, die in Gleitschienen (205A), mit denen die Vorderseite (140A) des Mundstücks (100) versehen ist, gleitend angebracht ist und durch Steuermittel betätigt wird.

22. Vorrichtung nach Anspruch 21,
**dadurch gekennzeichnet, dass** die Steuermittel ein Kurbelantriebssystem umfassen.

23. Vorrichtung nach Anspruch 21,
**dadurch gekennzeichnet, dass** die Steuermittel ein System aus Pneumatik- oder Hydraulik- oder Elektrozylinder umfassen.

24. Vorrichtung nach Anspruch 21,
**dadurch gekennzeichnet, dass** die Steuermittel einen Schwenkmechanismus umfassen.

25. Vorrichtung nach einem der Ansprüche 15 bis 24,
**dadurch gekennzeichnet, dass** das Verschlussstück (201; 201') kontinuierlich verschiebbar ist.

26. Vorrichtung nach einem der Ansprüche 15 bis 24,
**dadurch gekennzeichnet, dass** das Verschlussstück (201; 201') sequentiell verschiebbar ist.
